# EUROPEAN PATENT SPECIFICATION

(11) **EP 2 890 233 B1**
(45) Date of publication and mention of the grant of the patent: **28.11.2018**
(21) Application number: 13756198.1
(22) Date of filing: 22.08.2013
(51) Int. Cl.: A01D 34/66, E02F 3/76

(54) **COUPLING MECHANISM FOR COUPLING FIRST AND SECOND VEHICLE BODY PORTIONS AND CATCH THEREFOR**
KUPPLUNGSVORRICHTUNG ZUM VERBINDEN EINES ERSTEN MIT EINEM ZWEITEN FAHRZEUGKAROSSERIETEIL UND ANSCHLUSS DAFÜR
MÉCANISME DE COUPLAGE POUR COUPLER DES PREMIÈRE ET SECONDE PARTIES DE CARROSSERIE ET CLIQUET CORRESPONDANT

(30) Priority: 30.08.2012 GB 201215470
(43) Date of publication of application: 08.07.2015
(73) Proprietor: Wessex International Machinery, East Portway Industrial Estate Andover Hampshire SP10 3QN (GB)
(72) Inventor: BROWNING, Charles, Andover Hampshire SP10 3QN (GB); JAMES, Robert, Andover Hampshire SP10 3QN (GB); WOLFENDEN, Roy, Andover Hampshire SP10 3QN (GB)
(74) Representative: Chapman IP
(86) International application number: PCT/GB2013/052223
(87) International publication number: WO 2014/033436

(56) References cited:
- US-A- 2 943 407
- US-A- 3 606 929
- US-A- 3 628 612
- US-A- 4 074 770

## Description

The present invention relates to a coupling mechanism for coupling a first vehicle body portion to a second vehicle body portion, and particularly but not exclusively a coupling mechanism for coupling a rear wing of a winged mower to a body portion thereof arranged to enable yaw of the rear wing. The present invention also relates to a locking mechanism for use with the coupling mechanism.

As used herein, "roll" is the rotation of the second vehicle body portion relative to the first vehicle body portion about an axis parallel to the direction of motion.

As used herein, "pitch" is the rotation of the second vehicle body portion relative to the first vehicle body portion about an axis in the horizontal plane perpendicular to the direction of motion.

As used herein, "yaw" is the rotation of the second vehicle body portion relative to the first vehicle body portion about the vertical axis.

Mowing devices are widely used for cutting grass and plant matter. A wide variety of mowing devices are available for both domestic and industrial use including push-mowers, self-propelled mowers and tractor-drawn mowers. A typical tractor-drawn mower comprises a body portion and three wing portions: two wing portions disposed laterally symmetrically about the body portion and the third wing portion disposed rearwardly of the body portion with respect to the direction of travel. Each mowing wing is pivotally coupled to the body portion to allow the wings to be raised for transportation and storage purposes. The body portion is arranged for detachably coupling to a tractor (for example via the 3-point hitch of the tractor) and a drive assembly arranged to receive power form the Power Take Off (PTO) of the tractor.

In order for the mower to traverse ground undulations, the coupling between the rear mowing wing and the central body portion must be such that it allows relative movement between the two.

An example of a coupling mechanism for coupling a first vehicle body portion to a second vehicle body portion according the preamble of claim 1 is shown in document US 4,074,770.

In particular, it is desirable to enable the rear mowing wing to roll relative to the body portion to in order to traverse ground having a height differs along the lateral axis of the mower i.e. in a direction perpendicular to the direction of travel.

It is also desirable to allow translation of the rear mowing wing in the vertical direction relative to the central body portion and enable the rear mowing wing to pitch relative to the central body portion. It will be appreciated that the combination of vertical translation and pitch enable the mower to traverse ground having a height that differs along the longitudinal axis of the mower i.e. in the direction of travel.

Furthermore, it is desirable to enable yaw of the rear mowing wing relative to the central body portion in order to reduce the arc through which the rear mowing wing moves when the tractor turns or changes direction. Advantageously, this minimises the frictional loses that occur between the rear mowing wing and the ground and hence reduces the fuel consumption of the tractor. A further advantage is that yaw of the rear mowing wing relative to the central body portion reduces scuffing to turf surfaces caused by the ground engaging rollers and side-skids of the mower. Furthermore, yaw of the rear mowing deck reduces lateral forces that act on the mower framework and roller bearings when the tractor turns sharply and thus reduces the day-to-day wear and tear suffered by the mower.

Known coupling mechanisms such as two and three point linkage systems do not enable all of the above-described degrees of freedom of movement between the rear mowing wing and body portion. In particular, known coupling mechanisms do not enable yaw of the rear mowing wing relative to the central body portion.

We have now revised an improved coupling mechanism.

According to the present invention, there is provided a coupling mechanism for coupling a first vehicle body portion to a second vehicle body portion as climed in the accompanying claims.

In accordance with an embodiment of the invention, there is provided a coupling mechanism for a coupling a first vehicle body portion to a second vehicle body portion such that the first and second vehicle body portions are spatially separated along a longitudinal axis, the coupling mechanism comprising first and second legs which separately comprise first, second and third pivotal couplings, each pivotal coupling having an axis of rotation in a direction substantially perpendicular to the longitudinal axis, wherein
the first pivotal coupling of each leg is arranged for coupling an upper end of the respective leg to the second vehicle body portion,
the second pivotal coupling of each leg is arranged for coupling a lower end of the respective leg to the second vehicle body portion,
the third pivotal coupling of each leg is arranged for coupling the respective leg to the first vehicle body portion,
the axis of rotation of the first pivotal coupling of each leg is translatable in a first direction, and
the axis of rotation of the second pivotal coupling of each leg is translatable in a second direction.

It will be appreciated that the term "vehicle" may describe a powered vehicle such as a tractor or may describe an unpowered vehicle such as a trailer. In a preferred embodiment, the first vehicle may comprise a tractor and the second vehicle body may comprise a trailer. In an alternative preferred embodiment, the first vehicle body and the second vehicle body belong to a tractor attachment, the attachment being preferably adapted for coupling to the rear of a tractor.

The coupling mechanism of the present invention enables yaw of the second vehicle body portion relative to the first vehicle body portion. This is facilitated by the simultaneous pivotal motion of the first arm about the third pivotal coupling thereof and pivotal motion of the second arm in an opposite direction about the third pivotal coupling thereof, as described in greater detail below.

Preferably the third pivotal coupling of each leg is disposed intermediate the upper end and the lower end of the respective leg.

Preferably the longitudinal axis is substantially parallel to a direction of motion when in use. Accordingly, in this preferred embodiment, the first vehicle body portion is disposed forwardly or rearwardly of the second vehicle body portion with respect to the direction of motion. Most preferably, the coupling mechanism is arranged for coupling the first vehicle body portion to the second vehicle body portion such that the first vehicle body portion is disposed forwardly of the second vehicle body portion with respect to the direction of motion.

The first leg and the second leg are preferably disposed laterally either side of the longitudinal axis, and are most preferably disposed symmetrically about the longitudinal axis.

Preferably the axis of rotation of the third pivotal coupling of each leg is spatially fixed i.e. is preferably not translatable.

Preferably the axis of rotation of the third pivotal coupling of each leg is disposed substantially vertically centrally of the respective leg.

Preferably the axis of rotation of the third pivotal coupling of the first leg is co-axial with the axis of rotation of the third pivotal coupling of the second leg.

The first pivotal coupling of the first leg is preferably arranged for coupling the upper end of the first leg to the second vehicle body portion at a first location disposed thereupon.

The second pivotal coupling of the first leg is preferably arranged for coupling the lower end of the leg to the second vehicle body portion at a second location disposed thereupon, the second location being preferably disposed vertically below the first location.

The first pivotal coupling of the second leg is preferably arranged for coupling the upper end of the second leg to the second vehicle body portion at a third location disposed thereupon, the first location and the third location being preferably disposed either side of the longitudinal axis and most preferably laterally symmetrically about the longitudinal axis.

The second pivotal coupling of the second leg is preferably arranged for coupling the lower end of the second leg to the second vehicle body portion at a fourth location disposed thereupon, the fourth location being vertically below the third location. The second location and the fourth location are preferably disposed either side of the longitudinal axis and most preferably laterally symmetrically about the longitudinal axis.

The axis of rotation of the first pivotal coupling of each leg is preferably translatable relative to the respective leg and preferably rotatable relative to the second vehicle body portion.

The first direction is preferably substantially parallel to the longitudinal axis.

The first pivotal coupling of each leg may comprise a slot extending in a direction substantially parallel to the longitudinal axis and a pin arranged for sliding engagement with the slot and constrained therein. It will be appreciated that this embodiment allows for the translation of the axis of rotation of the first pivotal coupling relative to the respective leg. The pin may be fixedly coupled to the second body portion but is preferably pivotally coupled to a proximal end of a rod, a distal end of which is pivotally coupled to the second vehicle body portion to allow for rotation of the axis of rotation of the first pivotal coupling relative to the second body portion.

The axis of rotation of the second pivotal coupling of each leg is preferably translatable relative to the second vehicle body portion and preferably spatially fixed relative to the respective leg.

The second direction is preferably substantially perpendicular to the first direction. More preferably, the second direction is substantially parallel to the vertical axis.

The second pivotal coupling of each leg may comprise a slot extending in a direction substantially parallel to the vertical axis and a pin arranged for sliding engagement with the slot and constrained therein. It will be appreciated that this embodiment allows for the translation of the axis of rotation of the second pivotal coupling relative to the second vehicle body portion. The pin is preferably fixedly coupled to the lower end of the respective leg, preferably at a location disposed rearwardly of the axis of rotation of the respective third pivotal coupling.

The coupling mechanism preferably further comprises lifting means, the lifting means being preferably coupled to an upper end of each leg.

Preferably the lifting means comprises first and second hydraulic actuators, a proximal end of each hydraulic actuator is respectively pivotally coupled to the upper end of each leg, a lower end of each hydraulic actuator is pivotally coupled to the first vehicle body portion forwardly of the axis of rotation of the third pivotal coupling of the respective leg.

An embodiment of the present invention will now be described by way of example only and with reference to the accompanying drawings, in which:
Figure 1 is a perspective view of a coupling mechanism in accordance with the present invention as seen from the first aspect;
Figure 2 is an enlarged side view of a the coupling mechanism illustrated in Figure 1, the figure illustrating the second vehicle portion in a lowered position;
Figure 3 is an enlarged side view of a the coupling mechanism, the figure illustrating the second vehicle portion in a raised position;
Figure 4 is a schematic plan view of a vehicle comprising first and second body portions coupled by the coupling mechanism illustrated in Figures 1 to 3, the vehicle veering rightwards;
Figure 5 is a schematic perspective view of the yaw of the second vehicle portion of the vehicle illustrated in Figure 4; and,

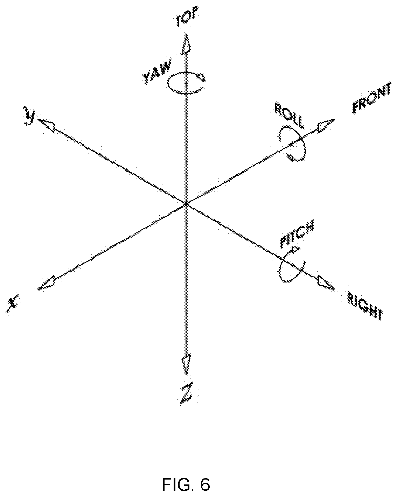

Figure 6 is a representation of yaw, roll and pitch with respect to Cartesian axes.

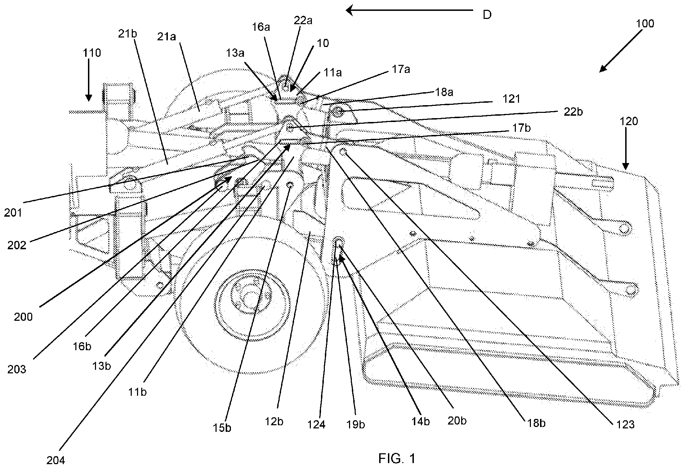

Referring to Figures 1 to 3 and Figure 5 of the drawings, there is illustrated a coupling mechanism 10 in accordance with the present invention as seen from the first aspect. The coupling mechanism 10 is arranged for coupling a first body portion 110 of a vehicle 100 to a second body portion 120 of the vehicle 100. In use, the vehicle 100 moves in a direction of travel indicated by the arrow D. In the illustrated embodiment, the vehicle 100 is a winged mower adapted for coupling to the rear of a tractor (not shown) such that it is driven by the tractor and receives power therefrom. The first body portion 110 is the central portion of the mower, whilst the second body portion 120 is a rear mowing wing comprising a plurality of mowing blades (not shown) on its lower face.

The first body portion 110 comprises an attachment mechanism in the form of an elongate arm 111 having a collar (not shown) for engaging with a tow-bar of a the tractor.

The coupling mechanism 10 comprises first and second legs 11a, 11b. The legs 11a, 11b extend in a substantially vertical direction and are disposed laterally either side of a longitudinal axis of the vehicle 100, the longitudinal axis being substantially parallel to the direction of motion when the vehicle 100 is in use. Each leg 11a, 11b separately comprises a rearwardly depending foot portion 12a, 12b.

The first leg 11a comprises a first pivotal coupling 13a, a second pivotal coupling 14a, and a third pivotal coupling 15a. The first pivotal coupling 13a of the first leg 11a is arranged for pivotally coupling an upper end of the first leg 11a to a first location 121 on the second body portion 120. The first pivotal coupling 13a comprises a slot 16a formed within the first leg 11a. The slot 16a extends longitudinally i.e. in a direction substantially parallel to the direction of motion when the vehicle 100 is in use. A pin 17a is constrained within the slot 16a and arranged to move slidingly therein. The axis of rotation first pivotal coupling 13a of the first leg 11a is thus translatable in the direction of motion of the vehicle 100. The pin 17a is pivotally coupled to a proximal end of a rigid rod 18a, the distal end of which is pivotally coupled to the second body portion 120 at the first location 121.

The second pivotal coupling 14a of the first leg 11a is arranged for pivotally coupling a lower end of the first leg 11a to a second location 122 on the second body portion 120. The second location 122 is disposed vertically below the first location 121 and laterally aligned therewith. The second pivotal coupling 14a comprises a slot (not shown) formed within the second body portion 120 and extending substantially in the vertical direction. A pin (not shown) is constrained within the slot and arranged to move slidingly therein. A distal end of the foot 12a of the first leg 11a is fixedly coupled to the pin (not shown). The axis of rotation second pivotal coupling 14a of the first leg 11a is thus translatable in the vertical direction

The third pivotal coupling 15a of the first leg 11a is spatially fixed and is arranged for pivotally coupling the first leg 11a to the first body portion 110. The third pivotal coupling 15a is disposed vertically intermediate the upper and lower ends of the first leg 11a such that it is approximately equidistant between the first pivotal coupling 13a and the second pivotal coupling 14a. The third pivotal coupling 15a is disposed forwardly of the second pivotal coupling 14a and substantially centrally of the slot 16a of the first pivotal coupling 13a in the longitudinal direction.

Similarly, the second leg 11b comprises a first pivotal coupling 13b, a second pivotal coupling 14b, and a third pivotal coupling 15b. The first pivotal coupling 13b of the second leg 11b is arranged for pivotally coupling an upper end of the second leg 11a to a third location 123 on the second body portion 120. The first location 121 and third location 123 are disposed laterally symmetrically about the longitudinal axis. The first pivotal coupling 13b of the second leg 11b is subsantially structurally identical to the first pivotal coupling 13a of the first leg 11a i.e. the first pivotal coupling 13b of the second leg 11b comprises a longitudinally extending slot 16b formed within the leg 11b. A pin 17b is constrained within the slot 16b and arranged to move slidingly therein. Accordingly, the axis of rotation of the first pivotal coupling 13b of the second leg 11b is translatable in the direction of motion of the vehicle 100. The pin 17b is pivotally coupled to a proximal end of a second rigid rod 18b, the distal end of which is pivotally coupled to the second body portion 120 at the third location 123.

The second pivotal coupling 14b of the second leg 11b is arranged for pivotally coupling a lower end of the second leg 11b to a fourth location 124 on the second body portion 120. The fourth location 124 is disposed vertically below the third location 123. The second pivotal coupling 14b of the second leg 11b is substantially structurally identical to the second pivotal coupling 14a of the first leg 11a i.e. the second pivotal coupling 14b of the second leg 11b comprises a vertically extending slot 19b formed within the second body portion 120. A pin 20b is constrained within the slot 19b and arranged to move slidingly therein. A distal end of the foot 12b of the second leg 11b is fixedly coupled to the pin 20b.

The third pivotal coupling 15b of the second leg 11b is spatially fixed and disposed co-axially with the third pivotal coupling 15a of the first leg 11a. The third pivotal coupling 15b is arranged for pivotally coupling the second leg 11b to the first body portion 110. The third pivotal coupling 15b is disposed vertically intermediate the upper and lower ends of the second leg 11b such that it is approximately equidistant between the first pivotal coupling 13b and the second pivotal coupling 14b. The third pivotal coupling 15b is disposed forwardly of the second pivotal coupling 14b and substantially centrally of the slot 16b of the first pivotal coupling 13b in the longitudinal direction.

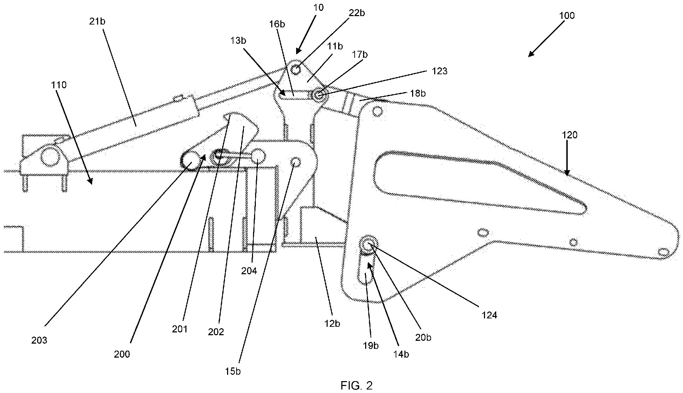

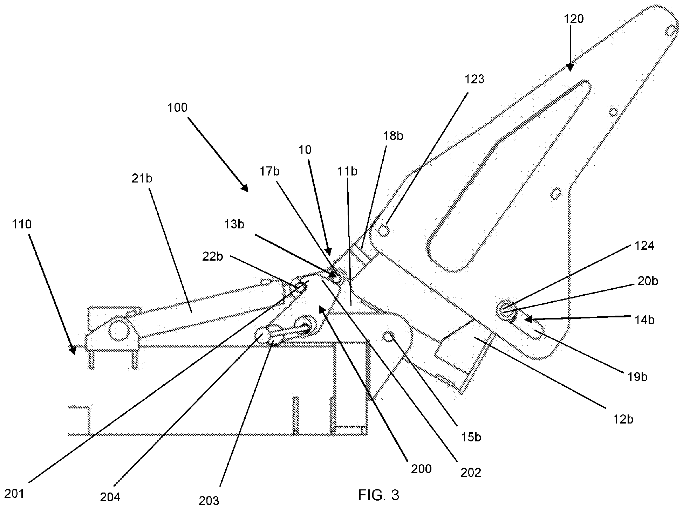

The coupling mechanism 10 further comprises a lifting mechanism in the form of first and second hydraulic actuators 21a, 21b respectively pivotally coupled at their proximal ends to the upper ends of the first and second legs 11a, 11b by pins 22a, 22b disposed above the first pivotal couplings 13a, 13b. The distal ends of the hydraulic actuators 21a, 21b are pivotally coupled to the first vehicle body portion 110. Accordingly, contraction of the hydraulic actuators 21a, 21b causes the first and second legs 11a, 11b to pivot about their respective third pivotal couplings 15a, 15b, the upper ends of the legs 11a, 11b moving rearwardly and the lower ends of the legs 11a, 11b moving forwardly. This facilitates the rotation of the second vehicle body portion 120 from a lowered position as illustrated in Figure 2 to a raised position as illustrated in Figure 3. It will be appreciated that in the illustrated embodiment, in which the vehicle 100 is a winged mower, the lowered position illustrated in Figure 2 is the operative position, whilst the raised position illustrated in Figure 3 facilitates transport and storage of the mower.

In use, the above-described coupling between enables relative movement between the first body portion 110 and second body portion 120. The coupling allows for at least four degrees of freedom of movement, as described below.

Vertical translation of the second body portion 120 relative to the first body portion 110 is facilitated by the simultaneous translation of the pins (not shown), 20b within the slots (not shown), 19b of the second pivotal couplings 14a, 14b and the rotation of the rods 18a, 18b about the first 121 and third 123 locations of the second body portion 120.

Roll (i.e. rotation about the longitudinal axis) is facilitated by pivotal motion of the first arm 11a about the third pivotal coupling 15a thereof in the opposite direction to pivotal motion of the second arm 11b about the third pivotal coupling 15b thereof. For example, if the height of the ground is greater on the right hand side of the vehicle 100 than on the left hand side, as viewed from the rear, then the first (rightmost) arm 11a pivots about its third pivotal coupling 15a such that the upper end moves forwardly and the lower end moves rearwardly. This causes the distal end of the foot 12b to move upwardly and the pin (not shown) of the second pivotal coupling 14a to move to the top of the slot (not shown). Consequently the right hand side of the second vehicle body portion 120 moves upwardly. The pivots at either end of the rod 18a of the first pivotal coupling 13a allow this upward motion of the right hand side of the second vehicle body portion 120 to occur without any undue strain on the coupling mechanism as a whole. Simultaneously the second (leftmost) arm 11b pivots about its third pivotal coupling 15b such that the upper end moves rearwardly and the lower end moves forwardly. The pin 20b of the second pivotal coupling 14b moves downwardly, thereby allowing the left hand side of the second vehicle body portion 120 to move downwardly. Again, the pivots at either end of the rod 18b the first pivotal coupling 13b allow this downward motion of the left hand side of the second vehicle body portion 120 to occur without any undue strain on the coupling mechanism.

Pitch (i.e. rotation about the lateral axis) is facilitated by simultaneous rotation of the first and second legs 11a, 11b about the respective third pivotal couplings 15a, 15b.

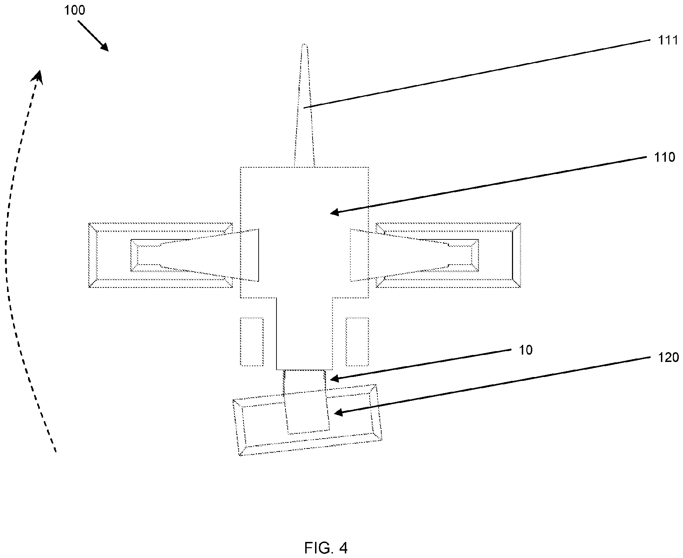

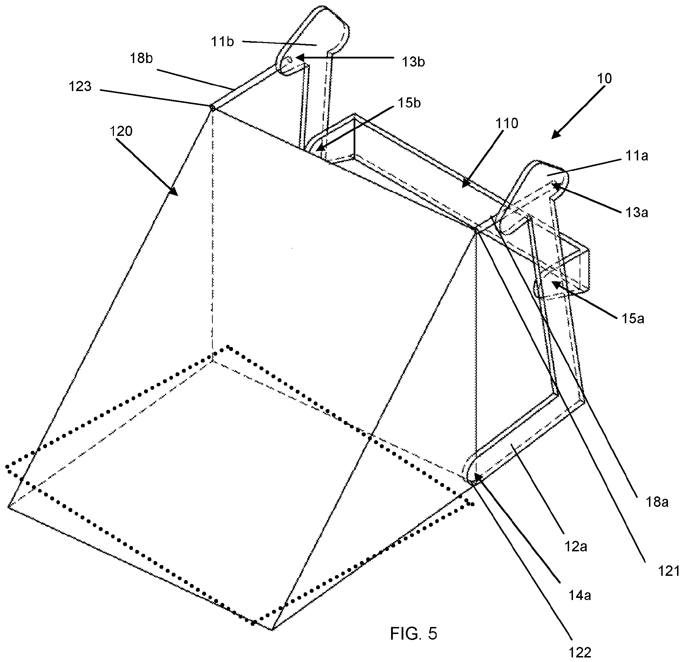

The coupling mechanism 10 also allows for yaw of the second vehicle body portion 110 (i.e. rotation about the vertical axis). For example, with particular reference to Figures 4 and 5, if the first vehicle body portion 110 were to veer right as viewed from the rear, the coupling mechanism 10 would allow a decrease in the displacement between the first vehicle body portion 110 and the second vehicle body portion 120 proximal to the right hand side of the vehicle 100 and an increase in the displacement between the first vehicle body portion 110 and the second vehicle body portion 120 proximal to the left hand side of the vehicle 100 (as viewed from the rear). This is facilitated by pivotal motion of the first (left hand) arm 11a about the third pivotal coupling 15a thereof in the opposite direction to pivotal motion of the second (right hand) arm 11b about the third pivotal coupling 15b thereof. In particular, the first arm 11a pivots about the third pivotal coupling 15a thereof such that its upper end moves rearwardly and its lower end moves forwardly. The second pivotal coupling 14a does not allow for translation in the direction of motion of the vehicle 100 and thus the rearward motion of the lower end of the arm 11a causes the left hand side of the second vehicle body portion 120 to move closer to the first vehicle body portion 110. The motion of the left hand side of the second vehicle body portion 120 towards the left hand side of the first vehicle body portion 110 causes the pin 17a of the first pivotal coupling 13a to slide rearwardly in the slot 16a, thereby allowing the first location 121 of the second vehicle body portion 120 to follow the movement of the second location 122 without any undue strain on the coupling mechanism as a whole. Conversely, the second arm 11b pivots about the third pivotal coupling 15b such that its upper end moves forwardly and its lower end moves rearwardly. The second pivotal coupling 14b does not allow for translation in the direction of motion of the vehicle 100 and thus the forward portion of the lower end of the arm 11b causes the right hand side of the second vehicle body portion 120 to move further from the first vehicle body portion 110. The motion of the right hand side of the second vehicle body portion 120 away from the first vehicle 110 portion causes the pin 17b of the first pivotal coupling 13b to slide forwardly in the slot 16b, thereby allowing the third location 123 of the second body vehicle 120 to follow the movement of the fourth location 124 without any undue strain on the coupling mechanism.

In an alternative embodiment (not shown), the second pivotal coupling 14a, 14b of the first and second arms 11a, 11b comprises a linear-motion bearing (not shown) in order to increase the degree of yaw facilitated by the coupling mechanism.

With particular reference to Figures 1 to 3 of the drawings, there is illustrated a catch 200. The 200 catch is arranged to engage with the first pivotal coupling 13b of the second leg 11b to hold the second vehicle body portion 120 in a raised position relative to the first vehicle body portion 110. This single catch 200 may be sufficient for this purpose or an identical catch (not shown) may be provided to engage with the first pivotal coupling 13a of the first leg 11a.

The catch 200 comprises an outwardly projecting head portion 201 at its distal end and a shoulder portion 202 proximal to the head portion. The catch 200 is pivotally coupled to the first vehicle body portion 110 at its proximal end by a pin 203. A lever 204 is provided for pivoting the catch between a disengaged position as illustrated in Figure 2 and an engaged position as illustrated in Figure 3.

The head portion 102 is arranged to engage with the pin 22b of the pivotal coupling between the second leg 11b and the second hydraulic actuator 21b. When the head portion 201 is engaged with the pin 22b, the upper end of the leg 11b is prevented from pivoting upwardly and rearwardly and hence the second vehicle body portion 120 is constrained in a raised position. Furthermore, when the head portion 201 is engaged with the pin 22b, the shoulder portion 202 obstructs the slot 16b of the first pivotal coupling 12b of the second leg 11b. The shoulder portion 202 has dimensions equal to the length of the slot 16b reduced by the diameter of the pin 17b constrained within the slot 16b. Accordingly, sliding motion of the pin 17b within the slot 16b is substantially prevented when the catch 200 is in the engaged position.

## Claims

1. A coupling mechanism (10) for a coupling a first vehicle body portion (110) to a second vehicle body portion (120) such that the first and second vehicle body portions are spatially separated along a longitudinal axis, the coupling mechanism (10) comprising first (11a) and second legs (11b) which separately comprise first (13a, 13b), second (14a, 14b) and third (15a, 15b) pivotal couplings, each pivotal coupling having an axis of rotation in a direction substantially perpendicular to the longitudinal axis, wherein
the first pivotal coupling of each leg is arranged for coupling an upper end of the respective leg to the second vehicle body portion,
the second pivotal coupling of each leg is arranged for coupling a lower end of the respective leg to the second vehicle body portion,
the third pivotal coupling of each leg is arranged for coupling the respective leg to the first vehicle body portion,
the axis of rotation of the first pivotal coupling of each leg is translatable in a first direction, and
the axis of rotation of the second pivotal coupling of each leg is translatable in a second direction,
**characterised in that**
the movement of said first leg and said second leg around their respective third pivotal couplings may be both simultaneous and in opposite directions to one another.

2. A coupling mechanism (10) according to claim 1, wherein the axis of rotation of the third pivotal coupling (15a, 15b) of each leg (11a, 11b) is not translatable.

3. A coupling mechanism (10) according to any preceding claim, wherein the axis of rotation of the third pivotal coupling (15a, 15b) of each leg (11a, 11b) is disposed substantially vertically centrally of the respective leg.

4. A coupling mechanism (10) according to any preceding claim, wherein the axis of rotation of the third pivotal coupling (15a) of the first leg (11a) is co-axial with the axis of rotation of the third pivotal coupling (15b) of the second leg (11b).

5. A coupling mechanism (10) according to any preceding claim, wherein the axis of rotation of the first pivotal coupling (13a, 13b) of each leg (11a, 11b) is translatable relative to the respective leg.

6. A coupling mechanism (10) according to any preceding claim, wherein the axis of rotation of the first pivotal coupling (13a, 13b) of each leg (11a, 11b) is rotatable relative to the second vehicle body portion (120).

7. A coupling mechanism (10) according to any preceding claim, wherein the first direction is substantially parallel to the longitudinal axis.

8. A coupling mechanism (10) according claim 7, wherein the first pivotal coupling of each leg (13a, 13b) comprises a slot (16a, 16b) extending in a direction substantially parallel to the longitudinal axis and a pin (17a, 17b) arranged for sliding engagement with the slot and constrained therein.

9. A coupling mechanism (10) according to claim 8, wherein the pin (17a, 17b) is pivotally coupled to a proximal end of a rod (18a, 18b), a distal end of which is pivotally coupled to the second vehicle body portion (120).

10. A coupling mechanism (10) according to any preceding claim, wherein the axis of rotation of the second pivotal coupling (14a, 14b) of each leg a, 11b) is translatable relative to the second vehicle body portion (120).

11. A coupling mechanism (10) according to any preceding claim, wherein the axis of rotation of the second pivotal coupling (14a, 14b) of each leg (11a, 11b) is spatially fixed relative to the respective leg.

12. A coupling mechanism according to any preceding claim, wherein the second direction is substantially perpendicular to the first direction.

13. A coupling mechanism according to any preceding claim, wherein the second direction is substantially parallel to a vertical axis.

14. A coupling mechanism (10) according to claim 13, wherein the second pivotal coupling (14a, 14b) of each leg comprised a slot (16a, 16b) extending in a direction substantially parallel to the vertical axis and a pin (17a, 17b) arranged for sliding engagement with the slot and constrained therein.

15. A coupling mechanism (10) according to claim 14, wherein the pin (17a, 17b) is fixedly coupled to the lower end of the respective leg (11a, 11b).

16. A coupling mechanism (10) according to any preceding claim, further comprising lifting means coupled to an upper end of each leg (11a, 11b).

17. A vehicle (100) comprising a first body portion (110), a second body portion (120) and a coupling mechanism (10) according to any of claims 1 to 16, the coupling mechanism being arranged for coupling the first body portion to the second body portion.

18. A vehicle (100) according to claim 17 wherein the vehicle is a mower and the second body portion (120) comprises a mowing blade disposed on a lower face thereof.

## Patentansprüche

1. Kupplungsvorrichtung (10) zum Kuppeln eines ersten Fahrzeugkarosserieteils (110) mit einem zweiten Fahrzeugkarosserieteil (120), sodass das erste und das zweite Fahrzeugkarosserieteil entlang einer Längsachse räumlich getrennt sind, wobei die Kupplungsvorrichtung (10) ein erstes (11a) und zweites Bein (11b) beinhaltet, die getrennt eine erste (13a, 13b), zweite (14a, 14b) und dritte (15a, 15b) schwenkbare Kupplung beinhalten, wobei jede schwenkbare Kupplung eine Drehachse in einer Richtung aufweist, die im Wesentlichen senkrecht zu der Längsachse liegt, wobei
die erste schwenkbare Kupplung von jedem Bein zum Kuppeln eines oberen Endes des jeweiligen Beins mit dem zweiten Fahrzeugkarosserieteil angeordnet ist,
die zweite schwenkbare Kupplung von jedem Bein zum Kuppeln eines unteren Endes des jeweiligen Beins mit dem zweiten Fahrzeugkarosserieteil angeordnet ist,
die dritte schwenkbare Kupplung von jedem Bein zum Kuppeln des jeweiligen Beins mit dem ersten Fahrzeugkarosserieteil angeordnet ist,
die Drehachse der ersten schwenkbaren Kupplung von jedem Bein in eine erste Richtung verschiebbar ist und
die Drehachse der zweiten schwenkbaren Kupplung von jedem Bein in eine zweite Richtung verschiebbar ist,
**dadurch gekennzeichnet, dass**
die Bewegung des ersten Beins und des zweiten Beins um ihre jeweilige dritte schwenkbare Kupplung sowohl gleichzeitig als auch in zueinander entgegengesetzten Richtungen zueinander erfolgen kann.

2. Kupplungsvorrichtung (10) gemäß Anspruch 1, wobei die Drehachse der dritten schwenkbaren Kupplung (15a, 15b) von jedem Bein (11a, 11b) nicht verschiebbar ist.

3. Kupplungsvorrichtung (10) gemäß einem vorhergehenden Anspruch, wobei sich die Drehachse der dritten schwenkbaren Kupplung (15a, 15b) von jedem Bein (11a, 11b) im Wesentlichen vertikal, zentral von dem jeweiligen Bein befindet.

4. Kupplungsvorrichtung (10) gemäß einem vorhergehenden Anspruch, wobei die Drehachse der dritten schwenkbaren Kupplung (15a) des ersten Beins (11a) zu der Drehachse der dritten schwenkbaren Kupplung (15b) des zweiten Beins (11b) koaxial ist.

5. Kupplungsvorrichtung (10) gemäß einem vorhergehenden Anspruch, wobei die Drehachse der ersten schwenkbaren Kupplung (13a, 13b) von jedem Bein (11a, 11b) in Bezug auf das jeweilige Bein verschiebbar ist.

6. Kupplungsvorrichtung (10) gemäß einem vorhergehenden Anspruch, wobei die Drehachse der ersten schwenkbaren Kupplung (13a, 13b) von jedem Bein (11a, 11b) in Bezug auf das zweite Fahrzeugkarosserieteil (120) drehbar ist.

7. Kupplungsvorrichtung (10) gemäß einem vorhergehenden Anspruch, wobei die erste Richtung im Wesentlichen parallel zu der Längsachse liegt.

8. Kupplungsvorrichtung (10) gemäß Anspruch 7, wobei die erste schwenkbare Kupplung von jedem Bein (13a, 13b) einen Schlitz (16a, 16b), der sich in einer Richtung erstreckt, die im Wesentlichen parallel zu der Längsachse liegt, und einen Stift (17a, 17b), der für Gleiteingriff mit dem Schlitz angeordnet und darin gebunden ist, beinhaltet.

9. Kupplungsvorrichtung (10) gemäß Anspruch 8, wobei der Stift (17a, 17b) mit einem proximalen Ende einer Stange (18a, 18b) schwenkbar gekoppelt ist, wobei ein distales Ende von dieser mit dem zweiten Fahrzeugkarosserieteil (120) gekoppelt ist.

10. Kupplungsvorrichtung (10) gemäß einem vorhergehenden Anspruch, wobei die Drehachse der zweiten schwenkbaren Kupplung (14a, 14b) von jedem Bein (11a, 11b) in Bezug auf das zweite Fahrzeugkarosserieteil (120) verschiebbar ist.

11. Kupplungsvorrichtung (10) gemäß einem vorhergehenden Anspruch, wobei die Drehachse der zweiten schwenkbaren Kupplung (14a, 14b) von jedem Bein (11a, 11b) in Bezug auf das jeweilige Bein räumlich fixiert ist.

12. Kupplungsvorrichtung gemäß einem vorhergehenden Anspruch, wobei die zweite Richtung im Wesentlichen senkrecht zu der ersten Richtung liegt.

13. Kupplungsvorrichtung gemäß einem vorhergehenden Anspruch, wobei die zweite Richtung im Wesentlichen parallel zu einer vertikalen Achse liegt.

14. Kupplungsvorrichtung (10) gemäß Anspruch 13, wobei die zweite schwenkbare Kupplung (14a, 14b) von jedem Bein einen Schlitz (16a, 16b), der sich in einer Richtung erstreckt, die im Wesentlichen parallel zu der vertikalen Achse liegt, und einen Stift (17a, 17b), der für Gleiteingriff mit dem Schlitz angeordnet und darin gebunden ist, beinhaltet.

15. Kupplungsvorrichtung (10) gemäß Anspruch 14, wobei der Stift (17a, 17b) mit dem unteren Ende des jeweiligen Beins (11a, 11b) starr gekoppelt ist.

16. Kupplungsvorrichtung (10) gemäß einem vorhergehenden Anspruch, die ferner ein Hebemittel beinhaltet, das mit einem oberen Ende von jedem Bein (11a, 11b) gekoppelt ist.

17. Fahrzeug (100), das ein erstes Karosserieteil (110), ein zweites Karosserieteil (120) und eine Kupplungsvorrichtung (10) gemäß einem der Ansprüche 1 bis 16 beinhaltet, wobei die Kupplungsvorrichtung zum Kuppeln des ersten Karosserieteils mit dem zweiten Karosserieteil angeordnet ist.

18. Fahrzeug (100) gemäß Anspruch 17, wobei das Fahrzeug ein Mäher ist und das zweite Karosserieteil (120) ein Mähmesser beinhaltet, das sich auf einer unteren Fläche von diesem befindet.

## Revendications

1. Mécanisme de couplage (10) destiné à coupler une première partie de corps de véhicule (110) à une deuxième partie de corps de véhicule (120) de sorte que les première et deuxième parties de corps de véhicule soient spatialement séparées le long d'un axe longitudinal, le mécanisme de couplage (10) comprenant des première (11a) et deuxième pattes (11b) qui comprennent séparément des premier (13a, 13b), deuxième (14a, 14b) et troisième (15a, 15b) couplages pivotants, chaque couplage pivotant ayant un axe de rotation dans une direction sensiblement perpendiculaire à l'axe longitudinal, dans lequel
le premier couplage pivotant de chaque patte est agencé pour coupler une extrémité supérieure de la patte respective à la deuxième partie de corps de véhicule,
le deuxième couplage pivotant de chaque patte est agencé pour coupler une extrémité inférieure de la patte respective à la deuxième partie de corps de véhicule,
le troisième couplage pivotant de chaque patte est agencé pour coupler la patte respective à la première partie de corps de véhicule,
l'axe de rotation du premier couplage pivotant de chaque patte peut faire l'objet d'une translation dans une première direction, et
l'axe de rotation du deuxième couplage pivotant de chaque patte peut faire l'objet d'une translation dans une deuxième direction,
**caractérisé en ce que**
le déplacement de ladite première patte et de ladite deuxième patte autour de leur troisième couplage pivotant respectif peut être simultané et dans des directions opposées.

2. Mécanisme de couplage (10) selon la revendication 1, dans lequel l'axe de rotation du troisième couplage pivotant (15a, 15b) de chaque patte (11a, 11b) ne peut pas faire l'objet d'une translation.

3. Mécanisme de couplage (10) selon l'une quelconque des revendications précédentes, dans lequel l'axe de rotation du troisième couplage pivotant (15a, 15b) de chaque patte (11a, 11b) est disposé sensiblement verticalement au centre de chaque patte respective.

4. Mécanisme de couplage (10) selon l'une quelconque des revendications précédentes, dans lequel l'axe de rotation du troisième couplage pivotant (15a) de la première patte (11a) est coaxial avec l'axe de rotation du troisième couplage pivotant (15b) de la deuxième patte (11b).

5. Mécanisme de couplage (10) selon l'une quelconque des revendications précédentes, dans lequel l'axe de rotation du premier couplage pivotant (13a, 13b) de chaque patte (11a, 11b) peut faire l'objet d'une translation par rapport à la patte respective.

6. Mécanisme de couplage (10) selon l'une quelconque des revendications précédentes, dans lequel l'axe de rotation du premier couplage pivotant (13a, 13b) de chaque patte (11a, 11b) peut faire l'objet d'une rotation par rapport à la deuxième partie de corps de véhicule (120).

7. Mécanisme de couplage (10) selon l'une quelconque des revendications précédentes, dans lequel la première direction est sensiblement parallèle à l'axe longitudinal.

8. Mécanisme de couplage (10) selon la revendication 7, dans lequel le premier couplage pivotant de chaque patte (13a, 13b) comprend une fente (16a, 16b) s'étendant dans une direction sensiblement parallèle à l'axe longitudinal et une goupille (17a, 17b) agencée pour une mise en prise coulissante avec la fente et pour y être contrainte.

9. Mécanisme de couplage (10) selon la revendication 8, dans lequel la goupille (17a, 17b) est couplée de manière pivotante à une extrémité proximale d'une tige (18a, 18b), dont une extrémité distale est couplée de manière pivotante à la deuxième partie de corps de véhicule (120).

10. Mécanisme de couplage (10) selon l'une quelconque des revendications précédentes, dans lequel l'axe de rotation du deuxième couplage pivotant (14a, 14b) de chaque patte (11a, 11b) peut faire l'objet d'une translation par rapport à la deuxième partie de corps de véhicule (120).

11. Mécanisme de couplage (10) selon l'une quelconque des revendications précédentes, dans lequel l'axe de rotation du deuxième couplage pivotant (14a, 14b) de chaque patte (11a, 11b) est spatialement fixe par rapport à la patte respective.

12. Mécanisme de couplage selon l'une quelconque des revendications précédentes, dans lequel la deuxième direction est sensiblement perpendiculaire à la première direction.

13. Mécanisme de couplage selon l'une quelconque des revendications précédentes, dans lequel la deuxième direction est sensiblement parallèle à un axe vertical.

14. Mécanisme de couplage (10) selon la revendication 13, dans lequel le deuxième couplage pivotant (14a, 14b) de chaque patte comprend une fente (16a, 16b) s'étendant dans une direction sensiblement parallèle à l'axe vertical et une goupille (17a, 17b) agencée pour une mise en prise coulissante avec la fente et pour y être contrainte.

15. Mécanisme de couplage (10) selon la revendication 14, dans lequel la goupille (17a, 17b) est couplée fixement à l'extrémité inférieure de la patte (11a, 11b) respective.

16. Mécanisme de couplage (10) selon l'une quelconque des revendications précédentes, comprenant en outre un moyen de levage couplé à une extrémité supérieure de chaque patte (11a, 11b).

17. Véhicule (100) comprenant une première partie de corps (110), une deuxième partie de corps (120) et un mécanisme de couplage (10) selon l'une quelconque des revendications 1 à 16, le mécanisme de couplage étant agencé pour coupler la première partie de corps à la deuxième partie de corps.

18. Véhicule (100) selon la revendication 17, le véhicule étant une tondeuse et la deuxième partie de corps (120) comprenant une lame de tonte disposée sur une face inférieure de celle-ci.
